(19) Europäisches Patentamt
European Patent Office
Office européen des brevets

(11) **EP 4 589 835 A1**

(12) **EUROPEAN PATENT APPLICATION**
published in accordance with Art. 153(4) EPC

(43) Date of publication:
**23.07.2025 Bulletin 2025/30**

(51) International Patent Classification (IPC):
**H02M 7/493** (2007.01)   **H02M 7/48** (2007.01)

(21) Application number: **23954579.1**

(52) Cooperative Patent Classification (CPC):
**H02M 7/48; H02M 7/493**

(22) Date of filing: **06.10.2023**

(86) International application number:
**PCT/JP2023/036589**

(87) International publication number:
**WO 2025/074630 (10.04.2025 Gazette 2025/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TMEIC Corporation
Tokyo 104-0031 (JP)**

(72) Inventors:
• **WATANABE, Hiroki
Tokyo 104-0031 (JP)**
• **NAKAMURA, Masashi
Tokyo 104-0031 (JP)**
• **OKA, Toshiaki
Tokyo 104-0031 (JP)**

(74) Representative: **Winter, Brandl - Partnerschaft
mbB
Alois-Steinecker-Straße 22
85354 Freising (DE)**

(54) **POWER CONVERSION SYSTEM**

(57)     A power conversion system includes a transformer, N first inverters, N second inverters, and a control unit. The transformer has primary windings of 2N branches for a three-phase alternating current (AC) and a secondary winding of a single branch for the three-phase AC. The control unit controls each of the N first inverters and the N second inverters according to pulse width modulation (PWM) control. A first primary winding corresponding to one of the N first inverters and a second primary winding corresponding to one of the N second inverters are decided on the basis of a magnitude of percentage impedance (%Z) from each primary winding to the secondary winding. A phase of a first carrier of PWM control for one of the N first inverters and a phase of a second carrier of PWM control for one of the N second inverters are inverted. N denotes a natural number greater than or equal to 2.

FIG. 1A

EP 4 589 835 A1

## Description

TECHNICAL FIELD

An embodiment of the present invention relates to a power conversion system.

BACKGROUND ART

There is a power conversion system that uses a transformer having primary windings of a plurality of branches and a secondary winding of a single branch to integrate alternating current (AC) power generated by a plurality of inverters into the single branch and output the integrated AC power. In a power conversion system configured in this way, a frequency component of a carrier signal for use in pulse width modulation (PWM) control of a plurality of inverters has an influence, resulting in the deterioration in the quality of the AC power output from the power conversion system. There is a demand for improving the quality of the AC power to be output by the power conversion system.

Citation List

Patent Document

Patent Document 1: Japanese Unexamined Patent Application, First Publication No. 2022-030283

SUMMARY OF INVENTION

Technical Problem

An objective of the present invention is to provide a power conversion system capable of further improving the quality of AC power to be output.

Solution to Problem

According to an embodiment, a power conversion system includes a transformer, N first inverters, N second inverters, and a control unit. A transformer has primary windings of 2N branches for a three-phase alternating current (AC) and a secondary winding of a single branch for the three-phase AC. The control unit controls each of the N first inverters and the N second inverters according to pulse width modulation (PWM) control. A first primary winding corresponding to one of the N first inverters and a second primary winding corresponding to one of the N second inverters are decided on the basis of a magnitude of percentage impedance (%Z) from each primary winding to the secondary winding. A phase of a first carrier of PWM control for one of the N first inverters and a phase of a second carrier of PWM control for one of the N second inverters are inverted. N denotes a natural number greater than or equal to 2.

BRIEF DESCRIPTION OF DRAWINGS

[FIG. 1A] A schematic configuration diagram of a power conversion system of an embodiment.
[FIG. 1B] A schematic configuration diagram of a power conversion system of a comparative example.
[FIG. 2] A configuration diagram of a transformer according to the embodiment.
[FIG. 3] An explanatory diagram of an example of a transformer according to the embodiment.
[FIG. 4A] An explanatory diagram of a variation in impedance of each primary winding in the power conversion system of the comparative example.
[FIG. 4B] An explanatory diagram of a variation in impedance of each primary winding in the power conversion system of the comparative example.
[FIG. 5] An explanatory diagram of measurement results of the impedance of each primary winding in the embodiment.
[FIG. 6A] An explanatory diagram of the generation of an electric current waveform according to the embodiment.
[FIG. 6B] An explanatory diagram of the generation of an electric current waveform according to the comparative example.
[FIG. 6C] An explanatory diagram of the generation of an electric current waveform according to the embodiment.
[FIG. 6D] An explanatory diagram of the generation of an electric current waveform according to the comparative example.
[FIG. 7] An explanatory diagram of observation results of the electric current flowing through each primary winding of a W-phase.
[FIG. 8] An explanatory diagram of an example of a transformer of a modified example.

DESCRIPTION OF EMBODIMENTS

Hereinafter, a power conversion system of an embodiment will be described with reference to the drawings.

In addition, in the following description, constituent elements having the same or similar functions are denoted by the same reference signs. Also, redundant description of those constituent elements may be omitted. In addition, an electrical connection may simply be referred to as a "connection."

(Embodiment)

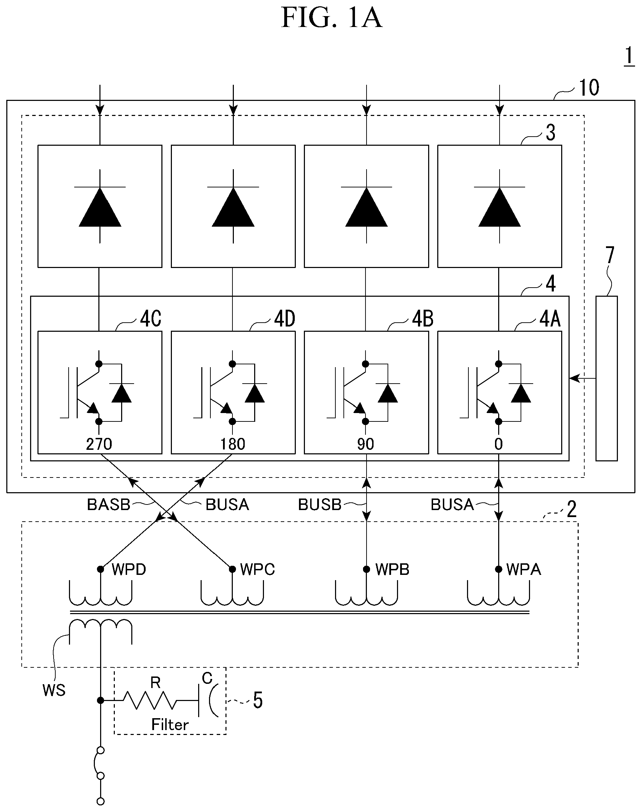

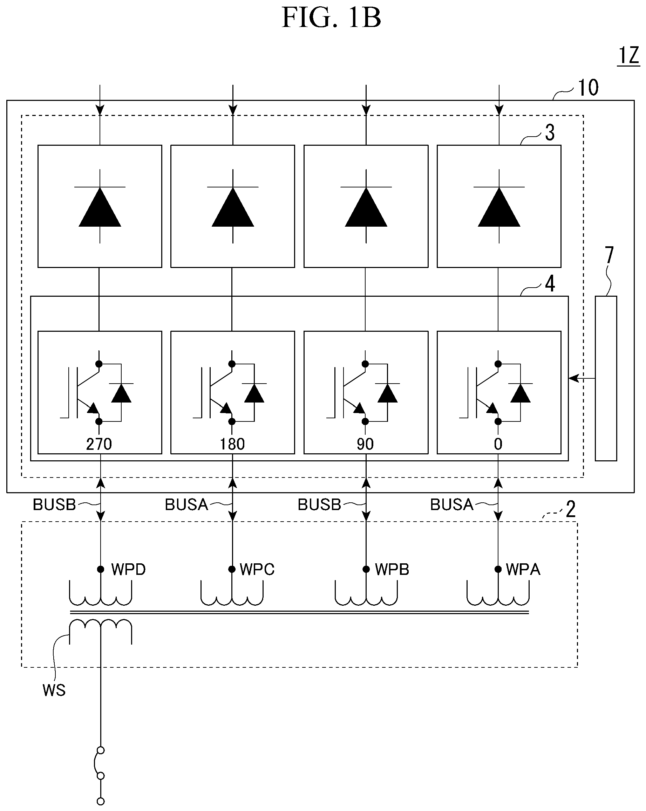

A four-bank power conversion system will be described with reference to FIGS. 1A and 1B.

FIG. 1A is a schematic configuration diagram of a power conversion system 1 of an embodiment.

FIG. 1B is a schematic configuration diagram of a power conversion system 1Z of a comparative example.

The power conversion system 1 of the embodiment will be described with reference to differences from the power conversion system 1Z of the comparative example.

Both the power conversion system 1 and the power conversion system 1Z are configured to output AC power of at least one branch from a transformer. A difference between the power conversion system 1 and the power conversion system 1Z has a phase relationship of a frequency component included in AC power supplied to a primary side of the transformer.

For example, both the power conversion system 1 and the power conversion system 1Z include a transformer 2, a rectifier 3, an inverter 4, a filter 5, and a control unit 7.

The transformer 2 is a three-phase AC transformer having primary windings of a plurality of branches and a secondary winding of a single branch. The transformer 2 is configured as, for example, a multi-winding transformer.

Each branch on the primary side of the transformer 2 has a three-phase AC winding. The number of branches on the primary side of the transformer 2 is an even number greater than or equal to 4. The number of branches on the primary side of transformer 2 can be expressed by (2N). Because N is a natural number greater than or equal to 2, (2N) is an even number greater than or equal to 4.

Because the bank configurations shown in FIGS. 1A and 1B have four banks, a more specific value of N is 2. The number of branches on the primary side of transformer 2 is 4. The four windings WPA, WPB, WPC, and WPD shown in the drawing are examples of primary windings for the W-phase of three-phase AC in the transformer 2, which has a primary winding with a Y-connection. A more detailed configuration of the transformer 2 will be described below.

In addition, the description of the number of banks is as follows.

The branch on the secondary side of the transformer 2 has a three-phase AC winding.

For example, if the primary winding of the transformer 2 shown in FIGS. 1A and 1B has a Y-connection and the secondary winding S has a Δ-connection, the primary and secondary sides can be associated with each other, for example, like a winding between RS lines corresponding to a primary-side W-phase, a winding between ST lines corresponding to a primary-side U-phase, and a winding between TR lines corresponding to a primary-side V-phase.

Moreover, if the primary winding of the transformer 2 shown in FIGS. 1A and 1B has a Δ-connection and the secondary winding S has a Y-connection, for example, a T-phase winding corresponding to a winding between primary-side UV lines, an R-phase winding corresponding to a winding between primary-side VW lines, and an S-phase winding corresponding to a primary-side WU-phase can be associated.

Moreover, if both the primary winding and secondary winding S of the transformer 2 shown in FIGS. 1A and 1B have a Δ-connection, for example, the lines on the primary and secondary sides can be associated.

Moreover, if both the primary winding and the secondary winding S of the transformer 2 shown in FIGS. 1A and 1B have a Y-connection, for example, it is possible to associate a primary-side phase and a secondary-side phase.

Although an example in which the primary winding of the transformer 2 in the above-described first example has a Y-connection and the secondary winding S has a Δ-connection will be described below, the present invention is not limited thereto and appropriate changes may be made with reference to the above-described corresponding relationship.

In addition, the transformer 2 is, for example, a step-up type transformer with a transformation ratio a. When the transformer 2 is a step-up type, the electric current flowing through the secondary winding is smaller than the electric current flowing through the primary winding. Heat generation due to copper loss in the secondary winding is reduced.

The rectifier 3 is configured to include, for example, a smoothing capacitor, and rectifies AC power and outputs DC power smoothed by a smoothing capacitor. The rectifier 3 may be configured to be divided into a plurality of branches. For example, the number of branches of the rectifier 3 is set to (2N) in accordance with the above.

The inverter 4 is provided on a load side of the rectifier 3. The inverter 4 has a semiconductor switching element and generates AC power on the basis of DC power according to a switching operation thereof. The inverter 4 may be configured to be divided into a plurality of branches. The number of branches of the inverter 4 is set to (2N) in accordance with the above.

The four inverters 4A, 4B, 4C, and 4D shown in FIGS. 1A and 1B are examples of three-phase AC inverters. For example, the inverters 4A, 4B, 4C, and 4D supply power to each primary winding of a U-phase and each primary winding of a V-phase in addition to each primary winding of a W-phase.

The filter 5 includes a resistor and a capacitor connected in series. The filter 5 is connected between lines on the secondary side of the transformer 2.

The control unit 7 switches each semiconductor switching element of the inverter 4 to output AC power from the inverter 4 to the transformer 2.

The rectifier 3, the inverter 4, and the control unit 7 described above are an example of a power conversion device 10.

The power conversion system 1 configured as described above uses, for example, a multi-winding transformer 2 having primary windings of a plurality of branches and a secondary winding of a single branch, to integrate AC power generated by a plurality of inverters into the single branch and output the integrated AC power.

Meanwhile, when the inverter 4 is operated by general PWM control, electric currents of the following frequency components are generated during the operation.

> a. Electric current component of fundamental frequency of AC
> b. Electric current component of harmonic frequency of fundamental frequency of AC
> c. Electric current components of carrier frequency of PWM control and frequency related to PWM control

In addition, a carrier frequency of PWM control is a frequency of a carrier signal of PWM control.

Among the above-described electric current components, the electric current components related to b and c include frequency components that are essentially unnecessary. Methods for reducing levels of such unnecessary frequency components will be described in order.

First, a first method for reducing the levels of unnecessary frequency components will be described.

When switching timings of semiconductor switching elements of a plurality of inverters are the same, a level of an unnecessary frequency component increases in synchronization with the timing. Here, the control unit 7 of the power conversion system 1 performs PWM control of a carrier phase shift modulation scheme so that a harmonic current of the fundamental frequency of AC is suppressed. When the carrier phase shift modulation scheme is applied, the phase of the carrier used by each inverter for PWM control is shifted by 360/2N degrees, thereby making it possible to suppress some of the unnecessary current components among the electric current components listed below.

This carrier phase shift modulation scheme suppresses the level of the electric current component of the above-described b, which occurs in synchronization with the switching timing. However, even if the carrier phase shift modulation scheme is used, because the electric current component of the above-described c is not suppressed, it may remain as a harmonic current.

Therefore, all of the (2N) inverters of the power conversion system 1 are divided into N first inverters constituting a first group and N second inverters constituting a second group, and the first inverters of the first group and the second inverters of the second group are configured in a one-to-one association. Also, it is only necessary for carriers of opposite phases to be used for the PWM control of the associated first and second inverters.

For example, a first connection conductor BUSA connects one first inverter in the first group that operates under the PWM control of a first carrier of a pair of first and second carriers to the first primary winding of the transformer 2. A second connection conductor BUSB connects one second inverter in the second group that operates under the PWM control of the second carrier of the pair to the second primary winding of the transformer 2. Thereby, it is possible to reduce an influence of bias in the voltage of the winding.

The power conversion system 1 includes the first connection conductor BUSA and the second connection conductor BUSB. The first connection conductor BUSA and the second connection conductor BUSB are an example of a busbar for connecting the first inverter and the second inverter to the transformer 2.

However, even if the first method is applied to the power conversion system 1Z of the comparative example, there are cases where it is difficult to obtain the effect of reducing a level of an unnecessary frequency component.

Therefore, in the present embodiment, a second method for reducing a level of an unnecessary frequency component is applied. Thereby, the occurrence of the above-described phenomenon is reduced.

Here, a case where the electric current component of the frequency related to the carrier frequency is reduced by focusing on the arrangement of the primary winding of the transformer 2 and the phase of the electric current flowing through the primary winding will be described.

More specifically, AC power with a predetermined phase difference is supplied to a winding pair whose primary winding arrangement relative to the core of the transformer 2 is symmetrical, thereby ensuring symmetry of the electrical characteristics of the winding pair. Here, the term "symmetry of the electrical characteristics of the winding pair" refers to percentage impedance (%Z) of the primary winding of the transformer 2.

First, a configuration of the transformer 2 will be described.

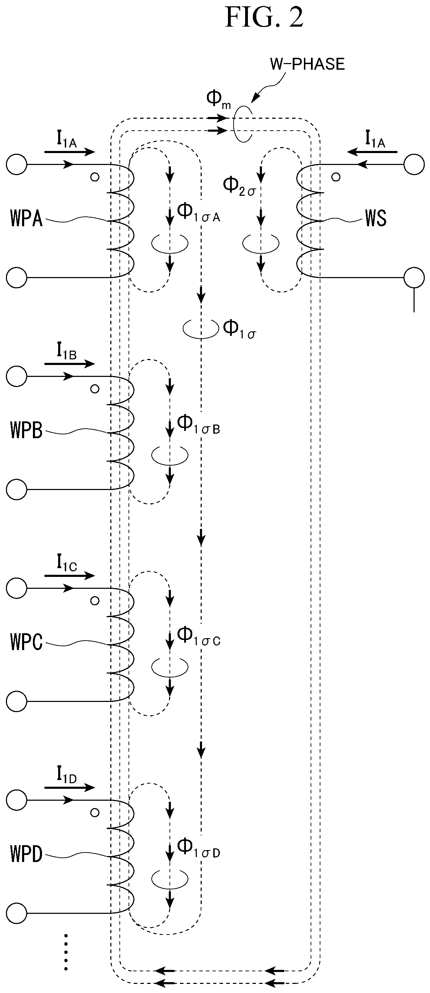

FIG. 2 is a configuration diagram of the transformer 2 of the embodiment.

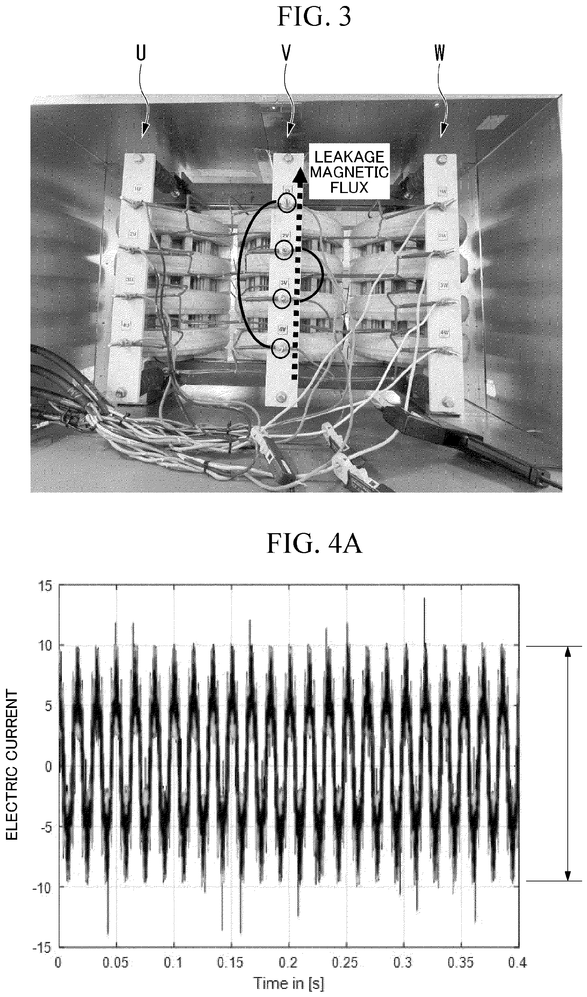

FIG. 3 is an explanatory diagram of an example of the transformer 2 of the embodiment.

In the transformer 2, the primary winding and the secondary winding are configured in correspondence with, for example, the UVW phases on the primary side. For example, the UVW phases have a common structure.

The range shown in FIG. 2 is the range related to the W-phase on the primary side, but the transformer 2 also has a U-phase and a V-phase in addition to this W-phase.

A rated voltage of the transformer 2 that is actually used is, for example, 600 V on the primary side and 6600 V on the secondary side, but is not limited thereto and may be changed as appropriate.

A photograph shown in FIG. 3 was taken from outside the housing of the transformer 2 in a state in which a part of the housing was removed for the photograph. A main body of the transformer 2 is placed inside a metallic housing made of aluminum or the like. Wiring and sensors for the transformer 2 and the like are placed for experimental purposes and are not limited to these arrangements and the like.

In the image in FIG. 3, three columns can be seen in a vertical direction. These columns are assigned to the U-phase, the V-phase, and the W-phase on the primary side from the left. The U-phase, the V-phase, and the W-phase are configured symmetrically.

For example, the core of each phase extends so that the direction of the main magnetic flux is set in the vertical direction of FIG. 3. The core of each phase is made of a magnetic material such as iron.

Next, an example of the core and winding configuration will be described in more detail using the W-phase as an example.

As shown in FIG. 2, a structure in which a plurality of primary winding coils and a secondary winding coil are wound around the W-phase core of the transformer 2 is provided. When a voltage is applied to the primary winding coil, a main magnetic flux $\Phi_m$ is generated in the core. This main magnetic flux $\Phi_m$ causes the coil of the secondary winding (RS) to generate a voltage.

This main magnetic flux $\Phi_m$ crosses both the primary winding and the secondary winding. In addition to the main magnetic flux $\Phi_m$, leakage magnetic fluxes $\Phi_{1\sigma A}$, $\Phi_{1\sigma B}$, $\Phi_{1\sigma C}$, and $\Phi_{1\sigma D}$ and leakage magnetic flux $\Phi_{2\sigma}$, which cross the primary and secondary windings individually, are generated. According to a situation, leakage magnetic flux $\Phi_{1\sigma}$ related to the primary winding is generated. The leakage magnetic flux $\Phi_{1\sigma}$ crosses the primary windings.

Even if a plurality of primary windings are of the same type of winding material or have the same number of turns, the same winding method, and the like, the impedance (%Z) of each primary winding may vary with the position of each primary winding on the core. In the present embodiment, the primary windings of the transformer 2 are arranged with a predetermined interval therebetween in an extension direction of one side of the core.

Hereinafter, the variation in impedance (%Z) of each primary winding will be described.

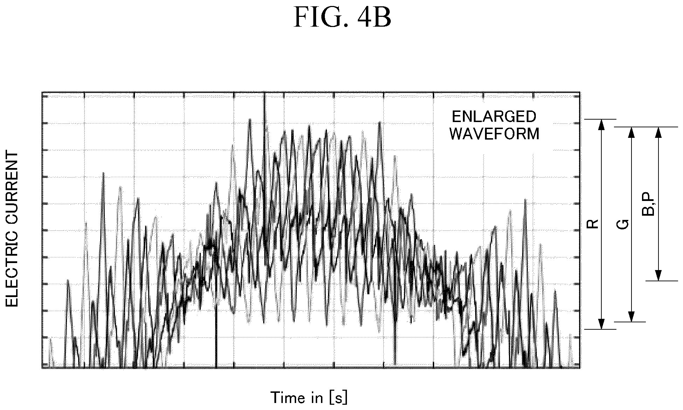

FIGS. 4A and 4B are explanatory diagrams of the variation in impedance of each primary winding in a power conversion system 1Z of a comparative example.

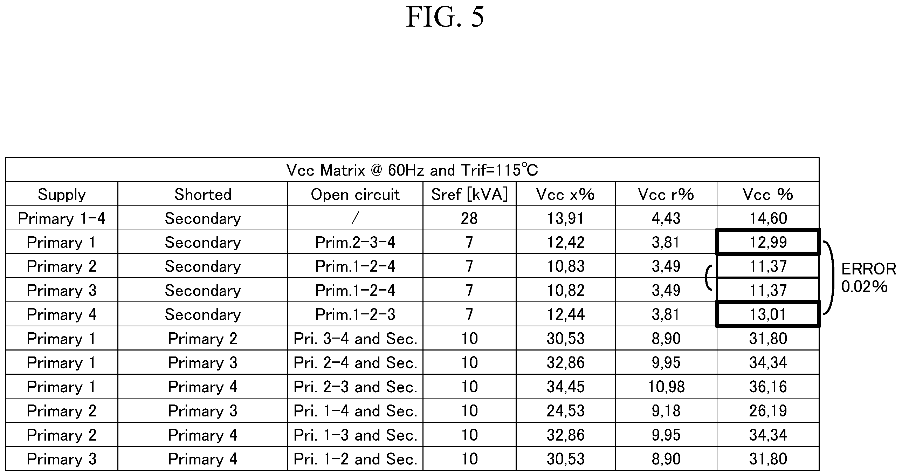

FIG. 5 is an explanatory diagram of a measurement result of the impedance of each primary winding.

A short-circuit current is measured in a state in which the secondary windings short-circuited and percentage impedance (%Z) of each primary winding is derived. The results are shown in the table of FIG. 5. In addition, the primary windings other than a measurement target primary winding are in an open state.

Percentage impedance (%Z) of the first primary winding (Primary 1) is 12.99%. Percentage impedance (%Z) of the second primary winding (Primary 2) is 11.37%. Percentage impedance (%Z) of the third primary winding (Primary 3) is also 11.37%. Percentage impedance (%Z) of the fourth primary winding (Primary 4) is 13.01%.

From these results, it can be seen that percentage impedance (%Z) values of the first primary winding (Primary 1) and the fourth primary winding (Primary 4) are relatively close to each other. The percentage impedance (%Z) values of the second primary winding (Primary 2) and the third primary winding (Primary 3) are shown to be the same. A difference between the percentage impedance (%Z) of the first primary winding (Primary 1) and the percentage impedance (%Z) of the fourth primary winding (Primary 4) and a difference between the percentage impedance (%Z) of the second primary winding (Primary 2) and the percentage impedance (%Z) of the third primary winding (Primary 3) are shown to be relatively small. This is just one example, but even in measurement results of similar cases, the percentage impedance (%Z) value of the second primary winding (Primary 2) and the percentage impedance (%Z) value of the third primary winding (Primary 3) tend to be relatively close to each other.

Moreover, among these four percentage-impedance (%Z) values, the percentage impedance (%Z) value of the first primary winding (Primary 1) and the percentage impedance (%Z) value of the fourth primary winding (Primary 4) are shown to be relatively large. When the percentage impedance (%Z) value of the first primary winding (Primary 1) and the percentage impedance (%Z) value of the second primary winding (Primary 2) are compared, the percentage impedance (%Z) value of the first primary winding (Primary 1) is larger.

The electric current of each phase was verified for the transformer 2 shown in FIG. 5.

The waveform diagrams shown in FIGS. 4A and 4B show the observation results of the electric current flowing through each primary winding of the W-phase in a state in which a resistive load of predetermined impedance is connected to the secondary winding of the transformer 2 under the connection configuration of the comparative example shown in FIG. 1B.

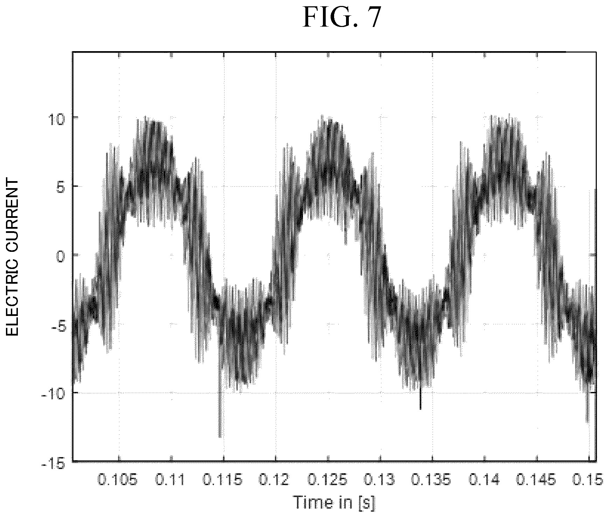

The waveform diagram shown in FIG. 7 shows an observation result of the electric current flowing through each primary winding of the W-phase in a state in which a resistive load of predetermined impedance is connected to the secondary winding of the transformer 2 under the connection configuration of the embodiment shown in FIG. 1A. FIG. 7 is an explanatory diagram of an observation result of an electric current flowing through each primary winding of the W-phase.

First, measurement results using the observation configuration of the comparative example will be described.

A waveform shown in FIG. 4A shows an observation result (an instantaneous value) of an electric current flowing through each of the first to fourth primary windings. A waveform shown in FIG. 4B is an enlarged portion of the waveform shown in FIG. 4A.

In the original graph of the measurement results, changes in the electric currents flowing through secondary windings are shown using lines of four colors, i.e., blue (B), red (R), green (G), and pink (P). These are converted to grayscale values and are shown in the drawing.

Peak and bottom values of each waveform, which are not easily distinguished due to grayscale conversion, are shown with auxiliary lines.

For example, the peak and bottom values of each waveform in FIG. 4B are extracted by selecting peak values during a period when an amount of change in the moving average is relatively small from a result of a moving average of the electric current values.

From the results shown in FIG. 4B, it can be seen that change widths of the respective electric currents of red (R) and green (G) are equal and change widths of the respective electric currents of blue (B) and pink (P) are equal.

In the case of this example, the arrangement order of the respective primary windings is blue (B), red (R), green (G), and pink (P), blue (B) and pink (P) correspond to both ends of the arrangement order, and red (R) and green (G) correspond to the middle of the arrangement order. For example, the primary windings corresponding to the above-mentioned blue (B), red (R), green (G), and pink (P) correspond to the first to fourth primary windings.

It can be seen that the tendency that can be read from the amplitude of this waveform is consistent with the tendency of percentage impedance (%Z) shown in FIG. 5 described above.

Next, the observation results using the configuration of the embodiment will be described with reference to FIG. 7.

This will be compared with the corresponding FIG. 4A. Although the scales of the time axes of FIG. 4A of the comparative example and FIG. 7 are different, the electric current values of the observation results output roughly the same amplitude. For example, spikes that exceed the range of the steady amplitude (the length of the arrow in the drawing) are detected. Here, it can be seen that the spikes in the observation results of FIG. 7 are smaller in magnitude and occur less frequently.

This result was obtained by observing the current in the primary winding, but a similar disturbance occurs on the secondary side at a timing when the spikes are observed.

By utilizing the method of the embodiment, it was confirmed that the degree and frequency of disturbances can be reduced, thereby improving the quality of the AC power output by the transformer 2.

As described above, the power conversion system 1 includes the transformer 2, N first inverters, N second inverters, and a control unit 7. The transformer 2 is a transformer having primary windings of 2N branches for three-phase AC and a secondary winding of a single branch for three-phase AC. The control unit 7 controls each of the first inverter and the second inverter according to PWM control. A first primary winding corresponding to one of the N first inverters and a second primary winding corresponding to one of the N second inverters are decided on the basis of a magnitude of percentage impedance (%Z) from each primary winding to the secondary winding. A phase of a first carrier of PWM control for one of the N first inverters and a phase of a second carrier of PWM control for one of the N second inverters are inverted. The value of N is a natural number of 2 or more, so that the quality of the AC power to be output can be further improved.

The primary windings of the 2N branches described above are insulated for each branch. As described above, a connection configuration combination of the primary windings of the 2N branches and the secondary winding is arbitrary. If a Δ-connection is included in the primary windings of the 2N branches and the secondary winding, it is possible to reduce tertiary harmonics without providing a tertiary winding having the Δ-connection. If the Δ-connection is not included in the primary windings of the 2N branches and the secondary winding, the tertiary winding having the Δ-connection may be configured to be provided.

The above-described primary windings of the 2N branches may be arranged for each phase of the three-phase AC so that the direction of the leakage magnetic flux generated in the common control cycle of the above-described PWM control is in a first direction.

It is only necessary to arrange the above-described primary windings of the 2N branches side by side so that the direction of the leakage magnetic flux is in the first direction along the extension direction of the core.

The above-described transformer 2 can be configured so that primary windings for N branches on one side and a secondary winding on a side facing the one side are provided in a core for each phase. Moreover, structural symmetry can be configured to be easily ensured according to the arrangement of the windings relative to the core. Thereby, it is easy to ensure symmetry in the electrical characteristics.

It is only necessary to connect a first inverter of the N first inverters to the primary winding of a first end for a first conductor between a pair of primary windings arranged at both ends among the primary windings of the 2N branches arranged side by side in the direction of the leakage magnetic flux and connect a second inverter of the N second inverters to the primary winding of a second end for a second conductor. It is only necessary to mutually invert the carrier phases of the PWM control in the PWM control of one of the N first inverters and one of the N second inverters. Thereby, drive pulses for semiconductor switching elements generated by mutually inverting carrier phases are supplied to the above-described pair of primary windings.

A percentage impedance (%Z) difference between the pair of primary windings arranged at both ends of the primary windings of the 2N branches side by side arranged in the direction of the leakage magnetic flux is smaller than a percentage impedance (%Z) difference between one of the pair of primary windings and the primary winding arranged adjacent to the one primary winding. Thereby, the level of the carrier component can be further reduced when a drive pulse for a semiconductor switching element generated by mutually inverting the carrier phases is supplied to a pair of primary windings than when a drive pulse for a semiconductor switching element generated by mutually inverting the carrier phases is supplied to one of the pair of primary windings and the primary winding arranged adjacent to the one primary winding.

By pairing windings with approximately the same magnitude of percentage impedance (%Z), the carrier frequency components generated by the windings can be canceled out, thereby suppressing harmonic currents. In addition, the above-described term "approximately the same magnitude of percentage impedance (%Z)" may include a case where the error is between 0 and a predetermined ratio (for example, about 0.02%).

Magnitudes of percentage impedance (%Z) of a pair of primary windings arranged at both ends of the primary windings of the 2N branches arranged side by side in the direction of the leakage magnetic flux are greater than the magnitude of percentage impedance (%Z) of a primary winding other than the pair of primary windings.

(Analysis of electric current waveform generated by transformer)

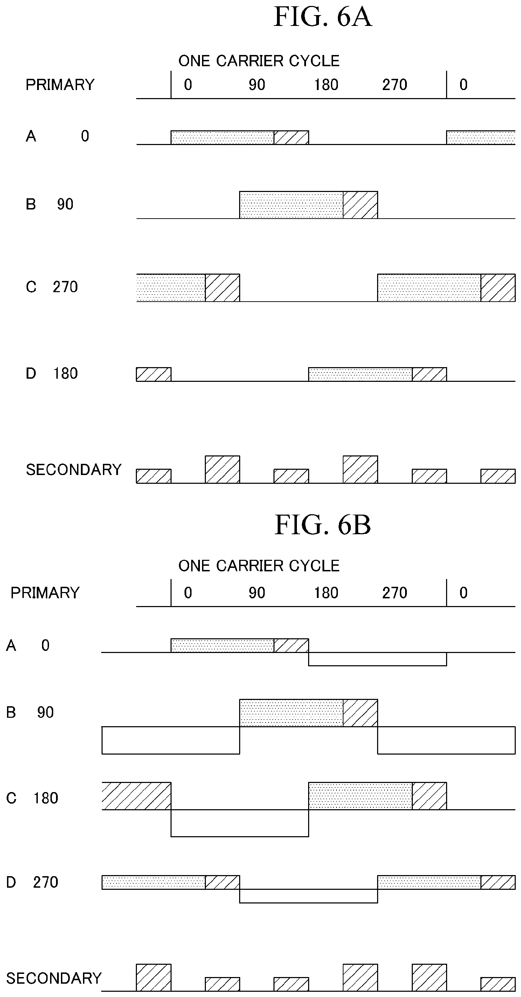

The generation of the electric current waveform of the embodiment will be described with reference to FIGS. 6A to 6D.

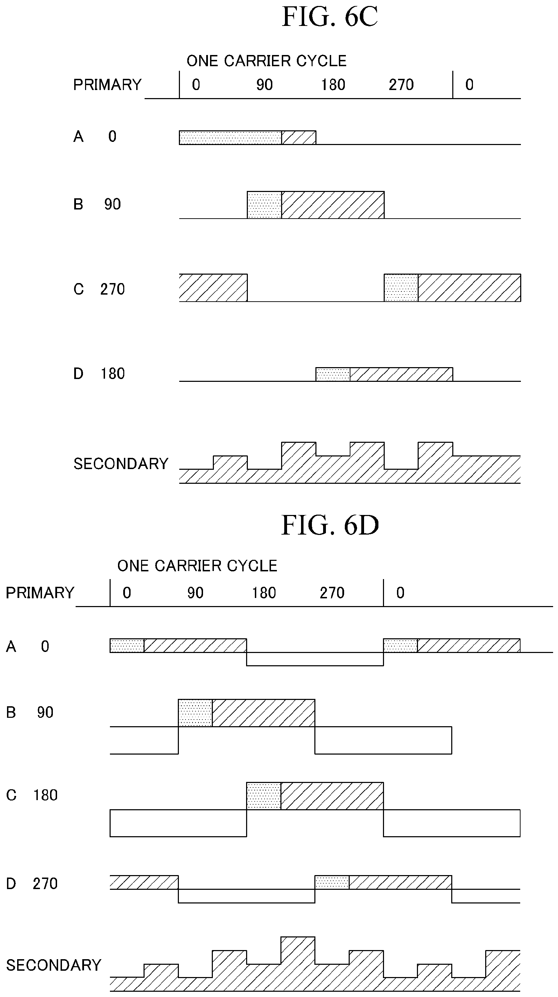

FIGS. 6A and 6C are explanatory diagrams of the generation of the electric current waveform of the embodiment.

FIGS. 6B and 6D are explanatory diagrams of the generation of the electric current waveform of the comparative example.

In common to FIGS. 6A to 6D, an upper part of each drawing shows an electric current flowing from the inverters of banks A to D within one cycle of PWM control. When the voltage (electric current) output from the transformer 2 is a positive AC voltage (electric current), each bank is assigned a period (a phase angle) during which an electric current flows between 0 and 180 degrees within one carrier cycle.

Among the four drawings of FIGS. 6A to 6D, FIGS. 6A and 6B show cases where an output level is relatively low and FIGS. 6C and 6D show cases where an output level is relatively high.

According to a modulation rate of PWM control, no electric current is output in a darkly shaded range within a half cycle of a carrier signal of PWM control and an electric current is output in a lightly shaded range.

There is a phase difference of 90 degrees between banks A to D. Therefore, a timing at which an electric current is output from each bank is shifted in a time axis direction (a phase axis direction) due to the above-described phase difference.

A lowest part of each drawing shows a result of adding up amplitudes of electric current pulses output from the inverters 4 of banks A to D. A timing indicated in the result of adding the amplitudes of the electric current pulses corresponds to a timing at which an electric current flows through the secondary winding of the transformer 2. The magnitudes of the amplitudes indicated in the results also correspond to each other. Although the amplitude is shown as an example for a transformer with a winding ratio of 1 in this drawing, it is only necessary to convert it into a scale according to a transformation ratio. As described above, the waveform in the lowest part of each drawing will be described as the output of the secondary winding.

The amplitude of the electric current pulse of the primary winding in each drawing and the phase of each bank will be described.

The amplitude of the electric current pulse of the primary winding in each drawing is the same for a pair of bank A and bank D and is the same for a pair of bank B and bank C.

Banks C and D in FIGS. 6A and 6C have phase differences of 270 and 180 degrees with respect to bank A.

In the cases of FIGS. 6A and 6C, periods during which banks A and D, which have relatively low amplitudes, output electric current pulses do not overlap. Moreover, there is no overlap in periods during which bank B and bank C, which have relatively high amplitudes, output electric current pulses.

Thereby, the output of the secondary winding has any one of four levels, i.e., 0, a level for one low amplitude pulse corresponding to the output of bank A (or bank D), a level for one high amplitude pulse corresponding to the output of bank B (or bank C), and a level for a sum of one low amplitude pulse corresponding to the output of bank A (or bank D) and one high amplitude pulse corresponding to the output of bank B (or bank C).

In contrast, bank C and bank D in FIGS. 6B and 6D have phase differences of 180 degrees and 270 degrees with respect to bank A.

In the cases of FIGS. 6B and 6D, there is a timing when the periods during which bank A and bank D, which have relatively low amplitudes, output electric current pulses, overlap. Moreover, there is also a timing when the periods during which bank B and bank C, which have relatively high amplitudes, output electric current pulses, overlap.

Compared to the above-described cases of FIGS. 6A and 6C, the output of the secondary winding additionally has an amplitude equal to a sum of two high amplitude pulses corresponding to the output of bank B (or bank C), and can be any one of five levels.

In this way, it was verified through modeling analysis that the output of the secondary winding fluctuates less in the case of the embodiment than in the case of the comparative example.

(First modified example)

In the above-mentioned embodiment, a four-bank configuration was exemplified. Each bank in the configuration had a phase difference of 90 degrees from each other. Therefore, the phase difference in units of 90 degrees was set for the timing at which an electric current was output from each bank.

Instead of this, in this modified example, a case where the number of banks is set to a number other than four will be described. For example, the description will be generalized to the even number of banks greater than or equal to four, i.e., (2N).

In this case, it is only necessary to calculate the phase angle of each bank using the following Expressions (1) and (2).

$$180 \times (n-1)/N \quad (1)$$

$$180 \times (n+1)/N \quad (2)$$

Here, n denotes a natural number between 1 and N.

It is only necessary to control a pair of banks set to phase angles calculated with Expressions (1) and (2) using a result of PWM control in which phases of carrier signals are opposite each other.

As shown in FIGS. 2 and 3 described above, leakage magnetic fluxes from the windings of the transformer 2 are generated in an extension direction of a core side (a normal direction of a surface created by the windings).

Therefore, two windings selected in the order of winding arrangement in a leakage magnetic flux direction are paired except for the windings at both ends. The windings of the pair are supplied with an electric current resulting from PWM control using carrier signals with a phase difference of 180 degrees. Thereby, it is possible to reduce the number of carrier components even in the case of six or more banks.

(Second modified example)

In the above-described embodiment, a transformer with a multi-winding configuration has been exemplified. Instead of this, in the present modified example, a configuration using a transformer with a combination of single-winding cores will be described.

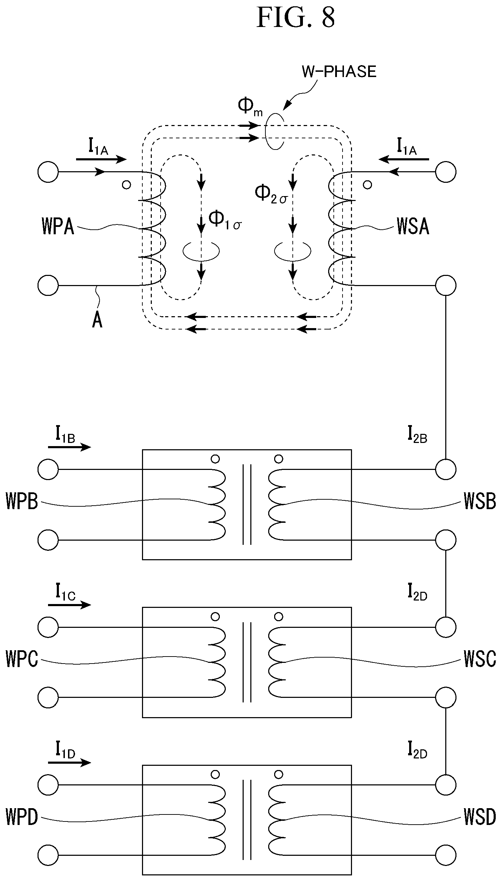

FIG. 8 is an explanatory diagram of an example of a transformer 2A of the modified example.

The transformer 2A has cores equal in number to the number of banks for each phase. For example, a configuration in which the number of cores for the W-phase on the primary side is four will be exemplified.

The secondary windings of the transformer 2A are divided in association with the cores. These are configured as secondary windings by connecting them in series with each other.

In the case of a configuration in which the cores are divided in this way, it is only necessary to arrange the cores so that the leakage magnetic flux generated in each core interlinks with the winding of the adjacent core.

According to at least one embodiment described above, a power conversion system includes a transformer, N first inverters, N second inverters, and a control unit. The transformer has primary windings of 2N branches for three-phase AC and a secondary winding of a single branch for three-phase AC. The control unit controls each of the first inverters and the second inverters according to PWM control. A first primary winding corresponding to one of the N first inverters and a second primary winding corresponding to one of the N second inverters are decided on the basis of a magnitude of percentage impedance (%Z) from each primary winding to the secondary winding. A phase of a first carrier of PWM control for one of the N first inverters and a phase of a second carrier of PWM control for one of the N second inverters are inverted. A value of N is a natural number greater than or equal to 2, such that the quality of the AC power to be output can be further improved.

Some or all of the functional units of the control unit 7 in the power conversion system 1 of the embodiment described above, for example, may have a software functional unit implemented by a processor (a hardware processor) of a computer executing a program (a computer program or a software component) stored in a storage unit (a memory or the like) of the computer. In addition, some or all of the functional units of the control unit 7 may be implemented by hardware such as a large-scale integration (LSI) circuit, an application-specific integrated circuit (ASIC), or a fieldprogrammable gate array (FPGA) or may be implemented by a combination of a software functional unit and hardware.

While some embodiments of the present invention have been described, these embodiments are presented as examples and do not intend to limit the scope of the invention. These embodiments can be implemented in other various forms, and various abbreviations, exchanges, and changes can be made without deviating from the spirit of the invention. For example, the configurations of the respective embodiments may be implemented in combination with each other and can be applied to the constituent part without description. These embodiments and their modifications are included in the scope and spirit of the invention and are also included in the inventions described in claims and equivalents thereof.

In the above-described embodiment, the above-described PWM control may be individually performed for each bank of inverters 4. Alternatively, the above-described PWM control may be performed for each set of inverters 4, thereby reducing the processing load of the PWM control by half.

For example, instead of performing PWM control using a carrier with a phase of 0 degrees on one inverter in a pair and then performing PWM control using a carrier with a phase of 180 degrees, the result of PWM control using the carrier with a phase of 0 degrees can be used to control the other inverter in the pair.

For example, the configuration of the inverter 4 is not limited and may be either a half-bridge type or a full-bridge type. Each inverter (4A, 4B, 4C, or 4D) may be a 180-degree conduction type or a 120-degree conduction type. There is no limitation on a voltage waveform (electric current waveform) formed by a combination of outputs of the respective inverters and a desired waveform can be selected. For example, an example in which the number of voltage pulses (electric current pulses) output by each inverter in one cycle of PWM control is one is shown, but the present invention is not limited thereto and a configuration in which a plurality of pulses are output in one cycle may be adopted. Moreover, for example, a secondary voltage waveform (electric current waveform) synthesized from the output of each inverter may be of a multi-level type.

REFERENCE SIGNS LIST

1    Power conversion system
2    Transformer
3    Rectifier
4    Inverter
7    Control unit
10   Power conversion device

**Claims**

1. A power conversion system comprising:

   a transformer having primary windings of 2N branches for a three-phase alternating current (AC) and a secondary winding of a single branch for the three-phase AC;
   N first inverters;
   N second inverters; and
   a control unit configured to control each of the N first inverters and the N second inverters according to pulse width modulation (PWM) control,
   wherein a first primary winding corresponding to one of the N first inverters and a second primary winding corresponding to one of the N second inverters are decided on the basis of a magnitude of percentage impedance (%Z) from each primary winding to the secondary winding,
   wherein a phase of a first carrier of PWM control for one of the N first inverters and a phase of a second carrier of PWM control for one of the N second inverters are inverted, and
   wherein a value of N is a natural number greater than or equal to 2.

2. The power conversion system according to claim 1, wherein the primary windings of the 2N branches are arranged for each phase of three-phase AC so that a direction of a leakage magnetic flux generated by each of the primary windings of the 2N branches in a common control cycle of the PWM control is in a first direction.

3. The power conversion system according to claim 2, wherein the primary windings of the 2N branches are arranged side by side so that a direction of the leakage magnetic flux is in the first direction along an extension direction of a core.

4. The power conversion system according to claim 3, wherein one of the N first inverters and one of the N second inverters are connected to a pair of primary windings arranged on both ends among the primary windings of the 2N branches arranged side by side in the direction of the leakage magnetic flux, respectively.

5. The power conversion system according to claim 4, wherein a percentage impedance (%Z) difference between the pair of primary windings arranged on both ends among the primary windings of the 2N branches arranged side by side in the direction of the leakage magnetic flux is less than a percentage impedance (%Z) difference between one of the pair of the primary windings and a primary winding arranged adjacent to the one primary winding.

6. The power conversion system according to claim 4, wherein magnitudes of percentage impedance (%Z) of the pair of primary windings arranged on both ends among the primary windings of the 2N branches arranged side by side in the direction of the leakage magnetic flux are greater than a magnitude of percentage impedance (%Z) of a primary winding other than the pair of primary windings.

7. The power conversion system according to claim 1, comprising:

   a first connection conductor configured to connect the one first inverter operated according to PWM control of a first carrier and a first primary winding within the 2N branches; and
   a second connection conductor configured to connect the one second inverter operated according to PWM control of the second carrier and a second primary winding within the 2N branches.

# FIG. 1A

# FIG. 1B

# FIG. 2

## FIG. 3

U    V    W

LEAKAGE
MAGNETIC
FLUX

## FIG. 4A

# FIG. 4B

ENLARGED
WAVEFORM

ELECTRIC CURRENT

Time in [s]

## FIG. 5

| Vcc Matrix @ 60Hz and Trif=115°C | | | | | | |
|---|---|---|---|---|---|---|
| Supply | Shorted | Open circuit | Sref [kVA] | Vcc x% | Vcc r% | Vcc % |
| Primary 1-4 | Secondary | / | 28 | 13,91 | 4,43 | 14,60 |
| Primary 1 | Secondary | Prim.2-3-4 | 7 | 12,42 | 3,81 | 12,99 |
| Primary 2 | Secondary | Prim.1-2-4 | 7 | 10,83 | 3,49 | 11,37 |
| Primary 3 | Secondary | Prim.1-2-4 | 7 | 10,82 | 3,49 | 11,37 |
| Primary 4 | Secondary | Prim.1-2-3 | 7 | 12,44 | 3,81 | 13,01 |
| Primary 1 | Primary 2 | Pri. 3-4 and Sec. | 10 | 30,53 | 8,90 | 31,80 |
| Primary 1 | Primary 3 | Pri. 2-4 and Sec. | 10 | 32,86 | 9,95 | 34,34 |
| Primary 1 | Primary 4 | Pri. 2-3 and Sec. | 10 | 34,45 | 10,98 | 36,16 |
| Primary 2 | Primary 3 | Pri. 1-4 and Sec. | 10 | 24,53 | 9,18 | 26,19 |
| Primary 2 | Primary 4 | Pri. 1-3 and Sec. | 10 | 32,86 | 9,95 | 34,34 |
| Primary 3 | Primary 4 | Pri. 1-2 and Sec. | 10 | 30,53 | 8,90 | 31,80 |

ERROR 0.02%

EP 4 589 835 A1

# FIG. 6A

ONE CARRIER CYCLE

PRIMARY

A    0

B    90

C    270

D    180

SECONDARY

# FIG. 6B

ONE CARRIER CYCLE

PRIMARY

A    0

B    90

C    180

D    270

SECONDARY

# FIG. 6C

ONE CARRIER CYCLE

PRIMARY    0    90    180    270    0

A   0

B   90

C   270

D   180

SECONDARY

# FIG. 6D

ONE CARRIER CYCLE

PRIMARY    0    90    180    270    0

A   0

B   90

C   180

D   270

SECONDARY

FIG. 7

# FIG. 8

## INTERNATIONAL SEARCH REPORT

| International application No. |
| --- |
| **PCT/JP2023/036589** |

**A. CLASSIFICATION OF SUBJECT MATTER**

*H02M 7/493*(2007.01)i; *H02M 7/48*(2007.01)i
FI:   H02M7/493; H02M7/48 F

According to International Patent Classification (IPC) or to both national classification and IPC

**B. FIELDS SEARCHED**

Minimum documentation searched (classification system followed by classification symbols)

H02M7/493; H02M7/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 7-222455 A (KAWABATA, Takao) 18 August 1995 (1995-08-18) paragraphs [0034], [0047], [0052]-[0053], fig. 1, 5, 8 | 1-4, 7 |
| A | paragraphs [0034], [0047], [0052]-[0053], fig. 1, 5, 8 | 5-6 |
| Y | JP 2013-162658 A (MITSUBISHI ELECTRIC CORPORATION) 19 August 2013 (2013-08-19) paragraphs [0064]-[0065], fig. 1, 15-16 | 1-4, 7 |
| Y | JP 11-122943 A (KABUSHIKI KAISHA TOSHIBA) 30 April 1999 (1999-04-30) paragraph [0118], fig. 27 | 1-4, 7 |
| A | paragraph [0118], fig. 27 | 5-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 November 2023** | **05 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/036589**

| Patent document cited in search report | | | Publication date (day/month/year) | Patent family member(s) | Publication date (day/month/year) |
|---|---|---|---|---|---|
| JP | 7-222455 | A | 18 August 1995 | (Family: none) | |
| JP | 2013-162658 | A | 19 August 2013 | (Family: none) | |
| JP | 11-122943 | A | 30 April 1999 | US 6229722 B1 column 13, lines 12-28, fig. 31 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022030283 A